# EUROPEAN PATENT SPECIFICATION

(11) **EP 3 772 449 B1**
(45) Date of publication and mention of the grant of the patent: **22.09.2021**
(21) Application number: 19200309.3
(22) Date of filing: 27.09.2019
(51) Int. Cl.: B62J 6/165, B62L 3/02, B62K 23/06, B62K 11/14, B62J 6/045

(54) **A BRAKE WARNING DEVICE MOUNTED ON A BICYCLE OR MOTORCYCLE HANDLE**
AUF EINEM FAHRRAD- ODER MOTORRADGRIFF MONTIERTE BREMSWARNVORRICHTUNG
DISPOSITIF D'AVERTISSEMENT DE FREIN MONTÉ SUR UNE BICYCLETTE OU UNE POIGNÉE DE MOTOCYCLETTE

(30) Priority: 07.08.2019 CN 201910724013
(43) Date of publication of application: 10.02.2021
(73) Proprietor: Meizhou Frii Lens Electronic Technologly Co., Ltd., Meizhou City, Guangdong (CN)
(72) Inventor: XU, Daozheng, MEIZHOU CITY, Guangdong (CN)
(74) Representative: Sach, Greg Robert

(56) References cited:
- DE-A1-102013 000 089
- DE-U1-202009 012 853
- DE-U1-202016 000 702
- DE-U1-202016 001 945
- US-A1- 2010 067 245
- US-A1- 2018 236 931

## Description

### FIELD OF THE INVENTION

The present invention relates to the technical field of manufacturing of accessory product of bicycles, tricycles and motorcycles, and in particular, relates to a brake warning device mounted on a bicycle or a motorcycle handle.

### BACKGROUND OF THE INVENTION

In vehicles and the densely populated areas of urban road, for example, bicycles, electric bicycles, tricycles or a motorcycles are shuttled, which lack a highly recognizable safety indicator, at the same time, when the above vehicles are used, it is difficult for the rear vehicle to clearly understand the braking intention of the bicycle, electric bicycle, tricycle or a motorcycle in front, it is difficult to grasp the brake condition of the user immediately, which is likely to cause a rear-end collision of the rear vehicle, at the same time, in vehicles and the densely populated areas of existing urban road there are no obvious brake lights on the bicycles and electric bicycles that are riding, which is not safe enough, to this end, it is proposed that a brake warning device, which is safe and reliable, can know the intention of using the brake in real time, this is the idea of the present invention

DE 20 2016 000702 U1 is considered the closest prior art to claim 1. DE 20 2016 000702 U1 shows a brake warning device mounted on a bicycle or a motorcycle handle, including a brake warning device mounted between the handle and a brake lever of the bicycle and a brake light wherein the brake warning device includes a moving portion, a fixing portion, and a sensory switch,the moving portion of the brake warning device includes a shaft spring, a second shaft, the fixing portion of the brake warning device includes a first fixing block and a second fixing block, the first fixing block and the second fixing block are assembled to form a loop structure, which can be mounted on the handle, the brake switch is located on the first fixing block,the second shaft passes through the first fixing block and is in contact with the brake switch.

### SUMMARY OF THE INVENTION

The object of the present invention is to provide a brake warning device which is safe and reliable and can know the intention of using the brake in real time, it is used to enhance the intention of the rear vehicle personnel to know the braking situation of the vehicle in front, take timely measures to brake in time to avoid rear-end collisions.

In order to achieve the above object, the present invention provides the following technical solution: a brake warning device mounted between a bicycle handle and a brake lever, the brake warning device includes a moving portion, a fixing portion, a brake switch, and a brake light, the moving portion of the brake warning device includes a first shaft fixing block, a second shaft fixing block, a first shaft, a shaft spring, a second shaft, and a protective outer spring, the first shaft fixing block and the second shaft fixing block are connected to form one and connected to the brake lever, the fixing portion of the brake warning device includes a first fixing block and a second fixing block, the first fixing block and the second fixing block are assembled to form a loop structure, which can be mounted on the handle, the brake switch is located on the first fixing block, the second shaft passes through the first fixing block and is in contact with the brake switch, the second shaft of the moving portion of the brake warning device is touched by the brake lever to trigger the brake switch to make the brake light mounted on the rear of the bicycle work or not.

A wireless signal transmitter is disposed in the brake switch, a wireless signal receiver is disposed in the brake light, a wireless communication connection is made between the brake switch and the brake light, both the wireless signal transmitter and the wireless signal receiver can be purchased on the market, and a detailed description thereof will not be given here.

The brake light includes a first brake light, a second brake light, a third brake light, a fourth brake light, and a fifth brake light, the first brake light is mounted on a safety helmet, the second brake light is embedded in the clothes jacket, the third brake light is embedded in a carrying waist pocket, the fourth brake light is mounted on a bicycle frame on the lower side of the cushion, the fifth brake light is mounted on the surface of a rear suitcase.

Preferably, inside the first brake light, the second brake light, the third brake light, the fourth brake light, and the fifth brake light are all included a wireless receiving chip device of the MTUN model.

Preferably, the first shaft fixing block and the second shaft fixing block are located outside the brake lever and stably mounted thereon, the first fixing block and the second fixing block are located outside the handle and stably mounted thereon.

Preferably, the handle can be provided with a meter, a wireless transmitter is disposed in the meter, a sixth brake light is disposed on the bicycle frame on the upper side of a rear wheel, the sixth brake light and the brake warning device are connected by wire.

Preferably, a turn light is provided at the bottom of the two sides of the handle.

Compared with the prior art, the present invention has the beneficial effects that when the rider holds the brake lever to brake while riding, the force of the braking action acts on the brake lever, and the shaft moves and touches the brake switch, thereby transmitting a wireless signal to the wireless receiving chip included in the brake light, the brake light is lit, the display of multiple brake light signals changes from one point to a three-dimensional surface, which serves as a clear reminder and improves the safety of the rider.

At the same time, the present invention is a matching accessory product for bicycles, electric bicycles, tricycles and motorcycles, and can be mounted between the handle and the brake lever immediately. There is no need to modify vehicles such as bicycles or to make other power connections, there are no security risks, and consumers will be more humanized.

### BRIEF DESCRIPTION OF THE DRAWINGS

Fig.1 is a schematic view of the structure of the present invention;
Fig.2 is a schematic view of structure of the brake linkage device of the present invention;
Fig.3 is a schematic view of the wired connection structure of the brake linkage device of the present invention;
Fig.4 is a circuit block diagram of the wireless transmitter of the present invention;
Fig.5 is a schematic view of the structure of the circuit flow of the brake light of the present invention.

Reference number in drawings are as follows in sequence:

In the drawings, 1 is a bicycle frame; 2 is a wheel; 3 is a sprocket; 4 is a handle; 5 is a cushion; 6 is a rear suitcase; 7 is a hood; 8 is a brake handle; 9 is a brake lever; 10 is a brake warning device; 11 is a first brake light; 12 is a second brake light; 13 is a third brake light; 14 is a fourth brake light; 15 is a fifth brake light; 20 is a first shaft fixing block; 21 is a second shaft fixing block; 22 is a first shaft; 23 is a shaft spring; 24 is a second shaft; 25 is a protective outer spring; 26 is a first fixing block; 27 is a second fixing block; 28 is a brake switch; 31 is a sixth brake light; 32 is a wireless signal transmitter; 50 is a brake light.

### DETAILED DESCRIPTION

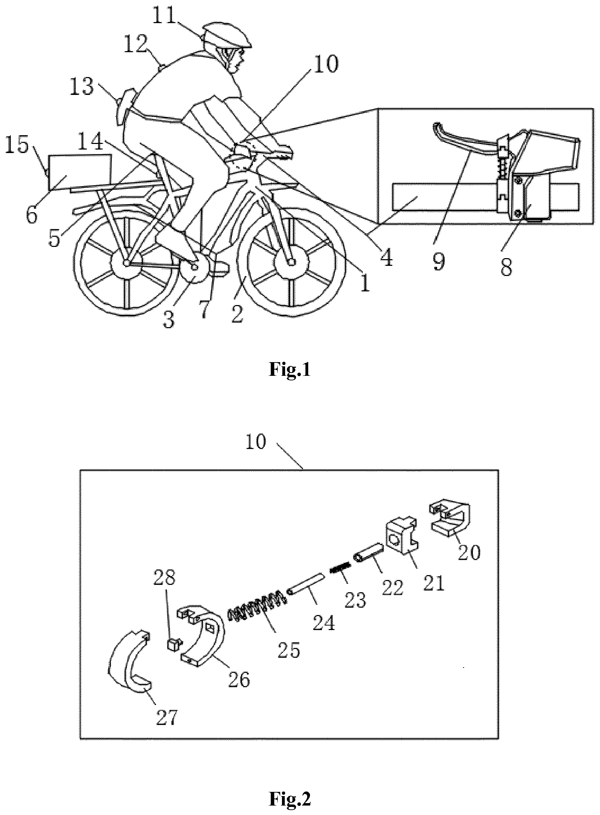

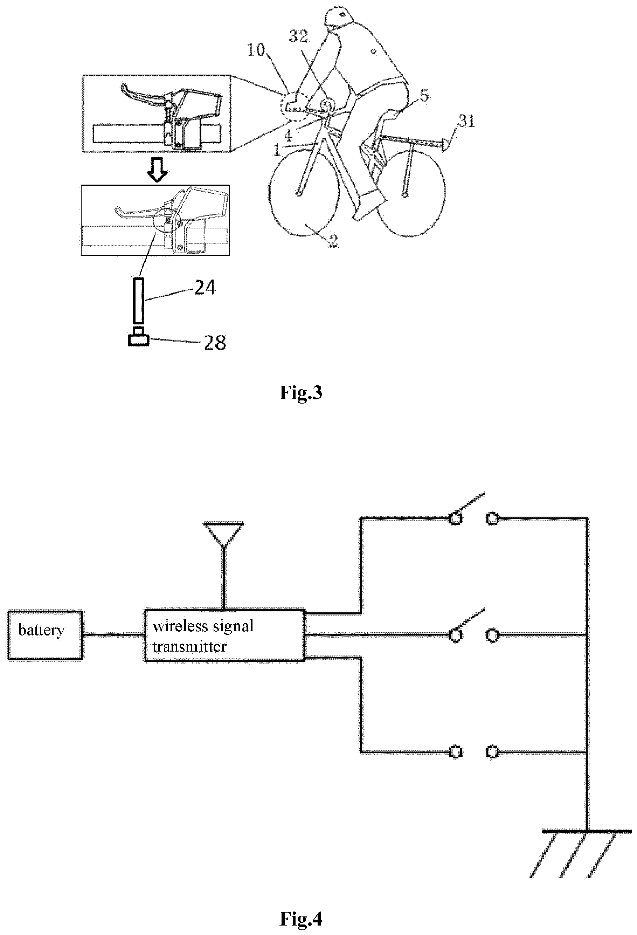

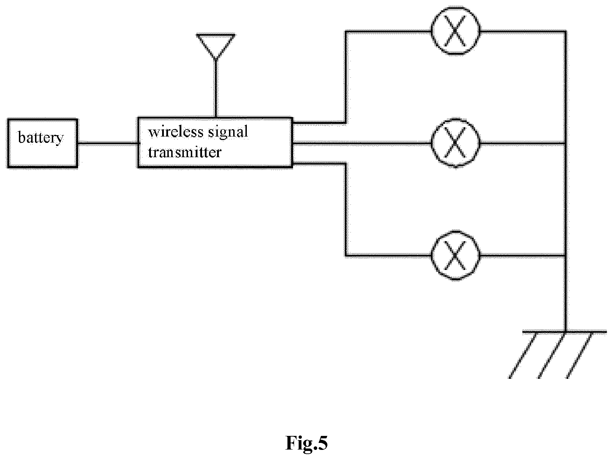

The technical solutions in the embodiments of the present invention are clearly and completely described in the following with reference to the accompanying drawings in the embodiments of the present invention. Referring to Fig. 1 to Fig. 5, the present invention provides a technical solution: a brake warning device mounted on a bicycle or a motorcycle handle includes: a brake warning device 10 mounted between the handle 4 and a brake lever 9 of the bicycle, the bicycle includes a bicycle frame 1, a wheel 2, a sprocket 3, a handle 4, a cushion 5, a rear suitcase 6, a hood 7, a brake handle 8, and a brake lever 9, the brake warning device 10 includes a moving portion, a fixing portion, a brake switch 28, and a brake light 50, the moving portion of the brake warning device 10 includes a first shaft fixing block 20, a second shaft fixing block 21, a first shaft 22, a shaft spring 23, and a second shaft 24, the fixing portion of the brake warning device 10 includes a first fixing block 26 and a second fixing block 27, the brake switch 28 is located on the first fixing block 26, the brake light 50 includes a first brake light 11, a second brake light 12, a third brake light 13, a fourth brake light 14, and a fifth brake light 15.

In this embodiment, the first brake light 11 is mounted on the safety helmet, the second brake light 12 is embedded in the clothes jacket, and the third brake light 13 is embedded in a carrying waist pocket.

In this embodiment, the fourth brake light 14 is mounted on a bicycle frame 1 on the lower side of the cushion 5; the fifth brake light 15 is mounted on the surface of a rear suitcase 6.

In this embodiment, inside the first brake light 11, the second brake light 12, the third brake light 13, the fourth brake light 14, and the fifth brake light 15 are all included a wireless receiving chip device of the MTUN model.

In this embodiment, the first shaft fixing block 20 and the second shaft fixing block 21 are located outside the brake lever 9, the first fixing block 26 and the second fixing block 27 are located outside the handle 4, the second shaft 24 is located between the second shaft fixing block 21 and the first fixing block 26, the protective outer spring 25 is set on the outside of the second shaft 24.

In this embodiment, the handle 4 is provide with a meter, a wireless signal transmitter32 is set in the meter, a sixth brake light 31 is disposed on the bicycle frame 1 on the upper side of a rear wheel 2, the sixth brake light 31 and the brake warning device 10 are connected by wire.

In this embodiment, a turn light is provided at the bottom of the two sides of the handle 4.

The brake warning device 10 of the present invention can be applied to any bicycle, motorcycle and tricycle, and the principle is the same. The working principle and the use process of the present invention is that when the rider holds the brake lever 9 to brake while riding, the force of the braking action acts on the brake lever 9, and the brake lever 9 will drive the first shaft fixing block 20 and the second shaft fixing block 21 of the shaft to move up and down, the second shaft 24 moves and touches the brake switch 28, thereby transmitting a wireless signal to the wireless receiving chip included in the brake light 50, and the brake light 50 is lit, the display of multiple brake light signals changes from one point to a three-dimensional surface, which serves as a clear reminder and improves the safety of the rider, thereby avoiding rear-end collisions.

## Claims

1. A brake warning device mounted on a bicycle or a motorcycle handle, including a brake warning device (10) mounted between the handle (4) and a brake lever (9) of the bicycle and a brake light (50), wherein:
the brake warning device (10) includes a moving portion, a fixing portion, and a brake switch (28),
the moving portion of the brake warning device (10) includes a first shaft fixing block (20), a second shaft fixing block (21), a first shaft (22), a shaft spring (23), a second shaft (24), and a protective outer spring(25),
the first shaft fixing block (20) and the second shaft fixing block (21) are connected to form one and connected to the brake lever (9),
the fixing portion of the brake warning device (10) includes a first fixing block (26) and a second fixing block (27),
the first fixing block (26) and the second fixing block (27) are assembled to form a loop structure, which can be mounted on the handle (4),
the brake switch (28) is located on the first fixing block (26),
the second shaft (24) passes through the first fixing block (26) and is in contact with the brake switch (28).

2. The brake warning device mounted on a bicycle or a motorcycle handle of claim 1, **characterized in that**:
a wireless signal transmitter (32) is disposed in the brake switch (28),
a wireless signal receiver is disposed in the brake light (50),
a wireless communication connection is made between the brake switch (28) and the brake light (50).

3. The brake warning device mounted on a bicycle or a motorcycle handle of claim 1, **characterized in that**:
the brake light (50) includes a first brake light (11), a second brake light (12), a third brake light (13), a fourth brake light (14), and a fifth brake light (15),
the first brake light (11) is mounted on a safety helmet,
the second brake light (12) is embedded in the clothes jacket,
the third brake light (13) is embedded in a carrying waist pocket,
the fourth brake light (14) is mounted on a bicycle frame (1) on the lower side of the cushion (5),
the fifth brake light (15) is mounted on the surface of a rear suitcase (6).

4. The brake warning device mounted on a bicycle or a motorcycle handle of claim 1, **characterized in that**:
a sixth brake light (31) is disposed on the bicycle frame (1) on the upper side of a rear wheel (2),
the second shaft (24) of the moving portion of the brake warning device (10) is touched by the brake lever (9) to trigger the brake switch (28) to make the brake light (50) mounted on the rear of the bicycle work or not.

## Patentansprüche

1. An einem Fahrrad- oder Motorradgriff angebrachte Bremswarnvorrichtung, umfassend einer Bremswarnvorrichtung (10), die zwischen dem Griff (4) und einem Bremshebel (9) des Fahrrads montiert ist, und ein Bremslicht (50), wobei:
die Bremswarnvorrichtung (10) einen beweglichen Abschnitt, einen Befestigungsabschnitt und einen Bremsschalter (28) beinhaltet,
der bewegliche Abschnitt der Bremswarnvorrichtung (10) einen ersten Wellenbefestigungsblock (20), einen zweiten Wellenbefestigungsblock (21), eine erste Welle (22), eine Wellenfeder (23), eine zweite Welle (24) und eine schützende äußere Feder(25) beinhaltet,
der erste Wellenbefestigungsblock (20) und der zweite Wellenbefestigungsblock (21) verbunden sind, um einen zu bilden und mit dem Bremshebel (9) verbunden sind,
der Befestigungsabschnitt der Bremswarnvorrichtung (10) einen ersten Befestigungsblock (26) und einen zweiten Befestigungsblock (27) beinhaltet,
der erste Befestigungsblock (26) und der zweite Befestigungsblock (27) zusammengebaut sind, um eine Schlaufenstruktur zu bilden, die am Griff (4) montiert werden kann,
sich der Bremsschalter (28) an dem ersten Befestigungsblock (26) befindet,
die zweite Welle (24) den ersten Befestigungsblock (26) durchquert und mit dem Bremsschalter (28) in Kontakt steht.

2. An einem Fahrrad- oder Motorradgriff angebrachte Bremswarnvorrichtung nach Anspruch 1, **dadurch gekennzeichnet, dass**:
ein drahtloser Signalgeber (32) im Bremsschalter (28) angeordnet ist,
im Bremslicht (50) ein drahtloser Signalempfänger angeordnet ist,
zwischen dem Bremsschalter (28) und dem Bremslicht (50) eine drahtlose Kommunikationsverbindung hergestellt wird.

3. An einem Fahrrad- oder Motorradgriff angebrachte Bremswarnvorrichtung nach Anspruch 1, **dadurch gekennzeichnet, dass**:
das Bremslicht (50) ein erstes Bremslicht (11), ein zweites Bremslicht (12), ein drittes Bremslicht (13),
ein viertes Bremslicht (14) und ein fünftes Bremslicht (15) beinhaltet,
das erste Bremslicht (11) an einem Schutzhelm montiert ist,
die zweite Bremsleuchte (12) in die Kleiderjacke eingebaut ist,
die dritte Bremsleuchte (13) in einer Bauchtragetasche eingebaut ist,
die vierte Bremsleuchte (14) an einem Fahrradrahmen (1) an der Unterseite der Polsterung (5) montiert ist,
die fünfte Bremsleuchte (15) auf der Oberfläche eines Heckkoffers (6) montiert ist.

4. An einem Fahrrad- oder Motorradgriff angebrachte Bremswarnvorrichtung nach Anspruch 1, **dadurch gekennzeichnet, dass**:
eine sechste Bremsleuchte (31) am Fahrradrahmen (1) auf der Oberseite eines Hinterrads (2) angeordnet ist,
die zweite Welle (24) des beweglichen Abschnitts der Bremswarnvorrichtung (10) vom Bremshebel (9) berührt wird, um den Bremsschalter (28) auszulösen, damit das Bremslicht (50), das am Heck des Fahrrads angebracht ist, funktioniert oder nicht.

## Revendications

1. Dispositif avertisseur de freinage monté sur un guidon de bicyclette ou de moto, comportant un dispositif avertisseur de freinage (10) monté entre le guidon (4) et un levier de frein (9) de la bicyclette et un feu stop (50), dans lequel :
le dispositif avertisseur de freinage (10) comporte une partie mobile, une partie de fixation et un interrupteur de frein (28),
la partie mobile du dispositif avertisseur de freinage (10) comporte un premier bloc de fixation d'arbre (20), un second bloc de fixation d'arbre (21), un premier arbre (22), un ressort d'arbre (23), un second arbre (24), et un ressort extérieur protecteur (25),
le premier bloc de fixation d'arbre (20) et le second bloc de fixation d'arbre (21) sont reliés en un seul bloc et reliés au levier de frein (9),
la partie de fixation du dispositif avertisseur de freinage (10) comporte un premier bloc de fixation (26) et un second bloc de fixation (27),
le premier bloc de fixation (26) et le second bloc de fixation (27) sont assemblés pour former une structure en boucle, qui peut être montée sur le guidon (4),
le commutateur de frein (28) est situé sur le premier bloc de fixation (26),
le second arbre (24) traverse le premier bloc de fixation (26) et est en contact avec le commutateur de frein (28).

2. Dispositif avertisseur de freinage monté sur un guidon de bicyclette ou de moto selon la revendication 1, **caractérisé en ce que** :
un émetteur de signal sans fil (32) est disposé dans le commutateur de frein (28),
un récepteur de signal sans fil est disposé dans le feu stop (50),
une connexion de communication sans fil est établie entre le commutateur de frein (28) et le feu stop (50).

3. Dispositif avertisseur de freinage monté sur un guidon de bicyclette ou de moto selon la revendication 1, **caractérisé en ce que** :
le feu stop (50) comporte un premier feu stop (11), un deuxième feu stop (12), un troisième feu stop (13), un quatrième feu stop (14) et un cinquième feu stop (15),
le premier feu stop (11) est monté sur un casque de sécurité,
le deuxième feu stop (12) est incorporé dans la veste des vêtements,
le troisième feu stop (13) est incorporé dans une poche de ceinture de transport,
le quatrième feu stop (14) est monté sur un châssis de bicyclette (1) sur la face inférieure du coussin (5),
le cinquième feu stop (15) est monté sur la surface d'une valise arrière (6).

4. Dispositif avertisseur de freinage monté sur un guidon de bicyclette ou de moto selon la revendication 1, **caractérisé en ce que** :
un sixième feu stop (31) est disposé sur le châssis de bicyclette (1) sur le côté supérieur d'une roue arrière (2),
le second arbre (24) de la partie mobile du dispositif avertisseur de freinage (10) est touché par le levier de frein (9) pour déclencher le commutateur de frein (28) afin d'amener le feu stop (50) monté à l'arrière de la bicyclette à fonctionner ou pas.
